# EUROPEAN PATENT APPLICATION

(11) **EP 1 098 408 A1**
(43) Date of publication of application: **09.05.2001**
(21) Application number: 00403053.2
(22) Date of filing: 03.11.2000
(51) Int. Cl.: H02G 3/00

(54) **Method of installing a wiring system in premises and wiring system therefor**

(30) Priority: 04.11.1999 JP 31390399
(71) Applicant: Sumitomo Wiring Systems, Ltd., Yokkaichi-City, Mie, 510-8503 (JP)
(72) Inventor: Kondo, Naohiro, c/o Sumitomo Wiring Systems, Ltd., Yokkaichi-city, Mie 510-8503 (JP)
(74) Representative: Uchida, Kenji

(57) **Abstract**

The method involves preparing the following items according to a design of the wiring system in a necessary number on a manufacturing site: first main harnesses (1) for data communications, first branch harnesses (2) for data communications, second main harnesses (3) for power supply, second branch harnesses (4) for power supply, OA taps (5) and a joint box (6) for power supply are prepared. These are combined and formed into a kit. The cables included in the above kit are subjected to end conditioning before the kit has been formed. The wiring system is designed according to the layout of the premises. The kit is then delivered to a mounting site where wiring is carried out. By virtue of this installation method, no construction scrap is formed on the mounting site. Further, even the non-specialized workers can execute the construction easily. Also, the working steps are simplified, and the way with which the wiring layout is installation is rendered more flexible.

## Description

The present invention relates to a method of installing a wiring system in an office or in other premises. In particular, the method of the invention is suitably applied to offices which are preferably equipped with highly automated apparatuses.

In recently-built, highly automated offices, wired space tends to become too voluminous. On the other hand, working environments in offices are now regarded as a much more important factor, compared to what they were in the past. For this reason, integrated information-wiring systems are frequently adopted to equip such offices. These systems utilize a double deck floor structure, the so called "free access floor system".

As a consequence, an acute need has arisen for shortening the period for installing or renewing wiring systems in premises. In the past practice, it is necessary to bring over into the installation site a variety of supplies, e.g. wiring connector component parts for wire ends, and racks for installing Local Area Network (LAN) systems which assemble ends of various distributing wires, etc.. These supplies are then formed into a layout corresponding to the installation site, through adjusting the cable length or conditioning or preparing the cable ends. The information communications systems are thus formed into a given wiring system in the premises or in offices.

In such cases, partially assembled equipment is also used in order to simplify the installation.

In the above method, the wiring system is constructed on the installation site, in accordance with the layout of the latter. It is thus necessary to transform the basic equipment, cables and component parts at the installation site, e.g. through cutting-out or conditioning for connections. This leads to work scraps or wastes being formed, and which must be disposed of by further handling processes.

The above method also includes many kinds of transformations which require a specific transformation technology, such as a conditioning of an end portion of a modular plug. Such a transformation takes much time when carried out by non-specialists, and results in a very low production yield. This situation raises another problem regarding how to find a technically qualified personnel.

Further, a detailed layout such as a layout for a user's desk tends to be decided at a late stage. Supply orders for wiring materials and component parts are then delayed, so putting off the due date for completing the installation.

Moreover, working space is usually limited in the rack where various distributing wires are assembled. Accordingly, work in the rack cannot be engaged by several persons at the same time, and hence more time is required for completing the work.

Further yet, whenever the final check-up reveals a constructional deficiency, its correction takes a long time. In addition, the on-the-site installation such as described above lacks flexibility, so that a change of layout cannot be responded to quickly enough.

A main object of the present invention is therefore to provide a method of installing a wiring system in premises that solves the above-mentioned problems.

To this end, there is provided a method of installing a wiring system in premises. The method comprises the steps of:
designing a wiring system corresponding to a layout of the premises;
providing, on a manufacturing site, at least a first main harness for data communications having two end portions, one of which is mounted with a first modular plug, and the other of which is mounted with an assembler socket having a plurality of first connector ports;
providing, likewise, at least a first branch harness for data communications having two end portions, one of which is mounted with a second modular plug to be connected to the first connector ports of the at least a first main harness, and the other of which is mounted with a terminal socket having at least one second connector port;
providing, likewise, at least a second main harness for power supply having two end portions, one of which is mounted with at least one connector terminal, and the other of which is mounted with a first relay plug;
providing, likewise, at least a second branch harness for power supply having two end portions, both of which are mounted with a respective second relay plug; and
providing, likewise, at least one OA (office automation) tap having two end portions, one of which is mounted with a power-supply plug and the other of which is mounted with a power-supply socket;
providing, likewise, at least one joint box for power supply including a plurality of third connector ports adapted for connecting to the first relay, second relay and power-supply plugs;
assembling aforementioned at least a first main harness, at least a first branch harness, at least a second main harness, at least a second branch harness, at least one OA tap and at least one joint box on the manufacturing site according to a design of the wiring system, so that a kit is formed; and
delivering the kit to the premises where wiring is carried out.

Preferably, the providing steps further comprise providing, on the manufacturing site, at least one rack for LAN systems which includes at least one wire-distributing board, at least one modular patch panel and at least one patch cord.

Preferably yet, the providing steps further comprise providing, on the manufacturing site, at least one electricity-distributing board.

There is also provided a wiring system adapted to be formed on a manufacturing site and delivered to premises where wiring is carried out. The wiring system comprises a kit formed by combining:
at least a first main harness for data communications having two end portions, one of which is mounted with a first modular plug, and the other of which is mounted with an assembler socket having a plurality of first connector ports;
at least a first branch harness for data communications having two end portions, one of which is mounted with a second modular plug to be connected to the first connector ports of the at least a first main harness, and the other of which is mounted with a terminal socket having at least one second connector port;
at least a second main harness for power supply having two end portions, one of which is mounted with at least one connector terminal, and the other of which is mounted with a first relay plug;
at least a second branch harness for power supply having two end portions, both of which are mounted with a respective second relay plug;
at least one OA tap having two end portions, one of which is mounted with a power-supply plug, and the other of which is mounted with a power-supply socket; and
at least one joint box for power supply including a plurality of third connector ports adapted for connecting to the first relay, second relay and power-supply plugs.

The wiring system is then designed according to a layout of the premises.

Preferably, the kit is formed by further combining at least one rack for LAN systems which includes at least one wire-distributing board, at least one modular patch panel and at least one patch cord.

Preferably yet, the kit is formed by further combining at least one electricity-distributing board.

The above and the other objects, features and advantages of the present invention will be made apparent from the following description of the preferred embodiments, given as non-limiting examples, with reference to the accompanying drawings, in which:
Fig.1 shows an example of a wiring system installation in premises according to the invention;
Fig.2 is a view showing how a harness, an OA tap and a joint box are connected to power supply source;
Fig.3 is a top plan view of a first main harness for data communications;
Fig.4 is a top plan view of a first branch harness for data communications;
Fig. 5 illustrates an example of how a patch cord end is prepared; and
Fig.6 illustrates another example of the preparation of a patch cord end.

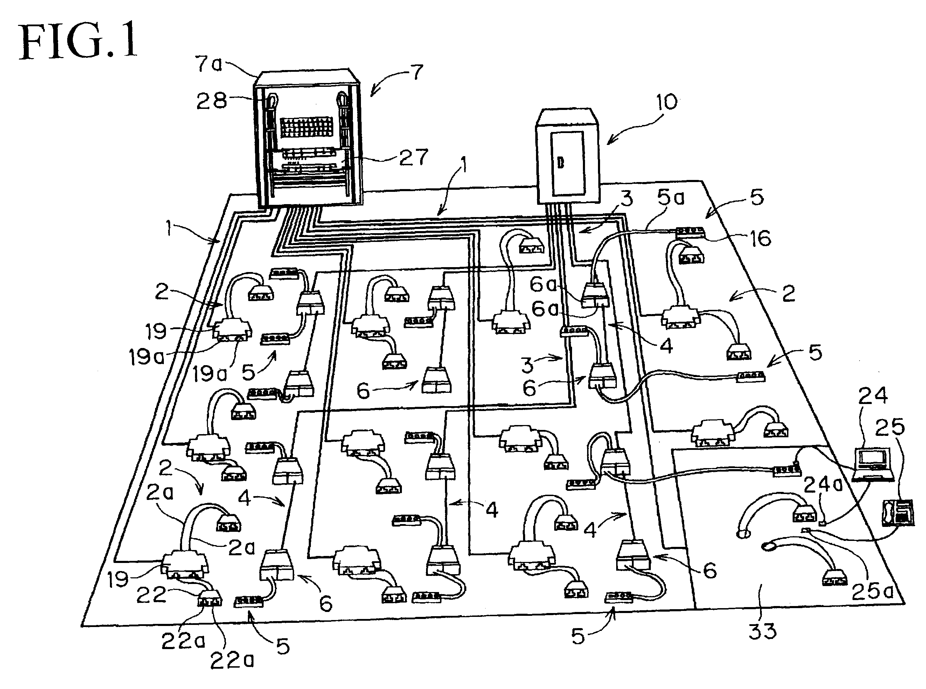

As shown in Figs.1 to 6, wiring materials used in the present wiring system for premises include at least a first main harness 1 to be wired, or intended for data communications (e.g. an assembly of six 4-pair UTP cables, where UTP means "unshielded twisted pair"), at least a first branch harness 2 to be wired for data communications (e.g. an assembly of two 4-pair UTP cables), at least a second main harness 3 to be wired for power supply (e.g. a portable power cable defined in Standard JIS C 3312:1993), at least a second branch harness 4 to be wired for power supply (e.g. another type of portable power cable mentioned in JIS Standard supra), at least one OA (Office automation) tap 5 (e.g. an electric outlet or a receptacle), at least one joint (or junction) box 6 wired for power supply and a rack 7 for LAN systems.

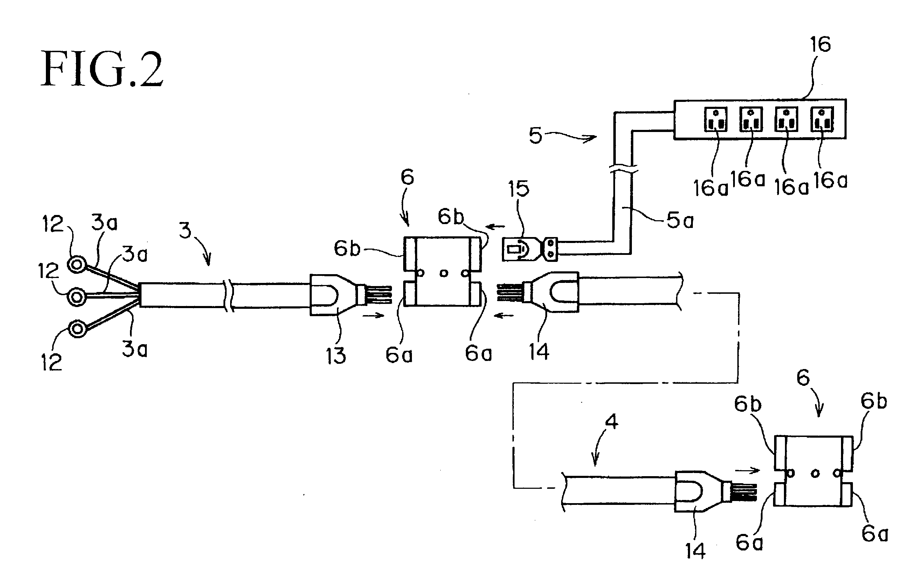

As shown in Figs.1 and 2, the second main harnesses 3 to be wired for power supply respectively contain three-core cables 3a. An end portion of each core cable 3a is equipped with a connector terminal 12 which leads to a distributing board 10. The other end portion thereof, which corresponds to the end portion of the second main harness 3 for a power source, is equipped with a first relay plug 13 for connection to a power source. The second main harnesses 3 are available in different lengths.

As shown in Figs.1 and 2, the second branch harnesses 4 for the power source also contain three-core cables, respectively. Both end portions of the respective second branch harness 4 are equipped with a second relay plug 14 for connection to the power source, similar or identical to the first relay plug 13 for connection to the power source. The second branch harnesses 4 are also available in different lengths.

Likewise, as shown in Figs.1 and 2, the OA tap 5 contains at least one OA code 5a. One end portion of the OA code 5a is equipped with a third-plug 15 for power-source, whilst the other end portion thereof is equipped with a power-supply socket, or receptacle 16, for a power source (as to assembler and terminal sockets, see infra). The power-supply socket includes a plurality of connector ports, or connector gates, 16a. The OA taps are available in different lengths.

Also shown in Figs.1 and 2 is a joint box 6 for a power source. The joint box 6 comprises a plurality of third connector ports 6a (as to first and second connector ports, see infra), through which are freely engaged or disengaged the first relay plug 13 for a power source and the second relay plug 14 for a power source. The joint box 6 also comprises a plurality of third-connector ports 6a or 6b, through which the power-supply plug 15 for a power source is freely engaged or disengaged. Further, connections are established, through appropriate inner circuits, amongst the third connector ports 6a, and between the third connector ports 6a and 6b.

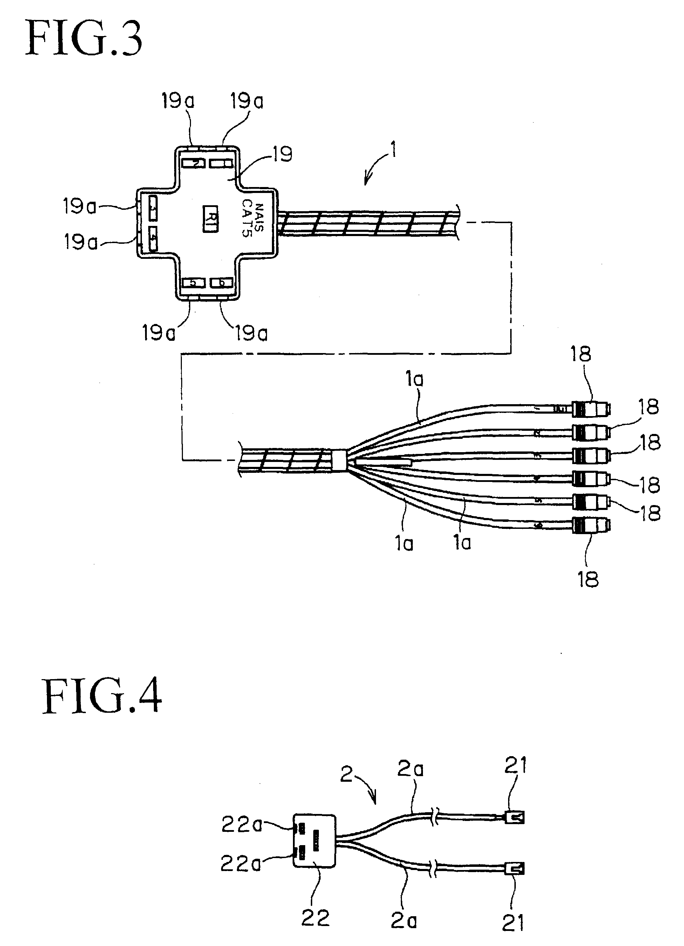

As shown in Figs. 1 and 3, the first main harness 1 for data communications includes six main-harness cables 1a for data communications. One end portion of each main-harness cable la is provided with a first modular plug 18, whilst the other end portion thereof is provided with an assembler socket 19 having a substantially cross-shaped form when viewed from the top.

A group of data-transmission cables la is inserted from one side port of the assembler socket 19, and these cables are separately arranged in three directions. The other three side ports of the assembler socket 19 respectively comprise two first connector port 19a with a modular jack. Through this modular jack are freely engaged or disengaged second modular plugs 21 attached to a first branch harness 2 for data communications.

In order to identify the first connector port 19a corresponding to each data-transmission cable 1a, the end portion of the latter and the corresponding first connector port 19a in the assembler socket 19 are provided with a corresponding number. The first main harnesses 1 for data communications are available in different lengths.

As shown in Figs. 1 and 4, the first branch harness 2 for data communications comprises two branch-harness cables 2a for data communications. One end portion of each branch-harness cable 2a is provided with a second modular plug 21, whilst the other end portion thereof is provided with a terminal socket 22 having a rectangular shape when viewed from the top.

Each branch-harness cable 2a is inserted into the terminal socket 22 from one end portion thereof. The other end portion of the terminal socket 22 is provided with two second connector ports 22a with a respective modular jack. Through this modular jack, third modular plugs 24a and 25a attached to a network apparatus, e.g. a personal computer 24 and a telephone apparatus, are freely engaged with, or disengaged from, the terminal socket 22.

In order to identify each branch-harness cable 2a with the corresponding second connector port 22a, an appropriate mark is provided on both of them. The first branch harnesses 2 for data communications are available in different lengths.

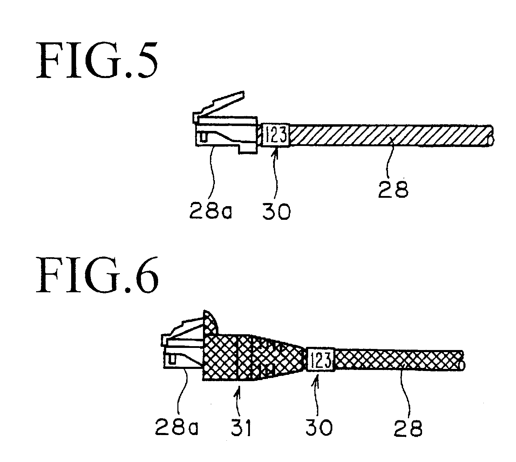

The rack 7 for LAN systems comprises a housing case 7a. The housing case 7a contains a modular patch panel 27 which comprises a distributing board and a plurality of modular jacks, and a plurality of patch cords 28, the end portion of which is provided with a third modular plug 28a. As shown in Figs.5 and 6, the end portion of each patch cord 28 is, where necessary, provided with number indicators 30 and a protective boot 31. They may also be painted in different colors (e.g. 13 colors).

The wiring system in the premises according to the present invention includes such wiring materials as mentioned above. When the system is to be installed, a wiring system or diagram is designed per unit of an ordered case or a building floor, as a function of an office's inside layout. On the basis of this design, there are provided first main harnesses 1 for data communications, first branch harnesses 2 for data communications, second main harnesses 3 for power supply, second branch harnesses 4 for power supply, and OA taps 5, respectively in a desired length. There is further provided a joint box 6 for power supply and a rack 7 for LAN systems. All these materials are prepared in a manufacturing plant in the required number.

After quality control, these materials are combined to form a kit and sent to the installation site. At the installation site, the combined materials in the kit are arranged for wiring, in accordance with a given design or diagram.

In an layout example shown in Fig.1, the kit comprises 12 first main harnesses 1 for data communications, 18 first branch harnesses 2 for data communications, 6 second main harnesses 3 for power supply, 6 second branch harnesses 4 for power supply, 15 OA taps 5 and 12 joint boxes for power supply, respectively in different lengths for each category. The kit further may further comprise a rack for LAN systems.

The end portions of wiring materials must be conditioned or prepared appropriately, e.g. by mounting thereto the first and second modular plugs 18 and 21. According to above-described wiring system installation method, these end portions are conditioned beforehand, prior to delivery, so that no end-conditioning process is required when carrying out the wiring at the installation site. As a result, no scrap is formed at the installation site.

As understood from above, it is no longer needed to carry out the end conditioning of the cables on the installation site. Consequently, any non-specialized person can execute wiring and connecting procedures easily and in a short period, according to a given system construction. The working procedures are thus simplified, and workers therefor can be found easily.

Further yet, all the necessary component parts are made in manufacturing factories. The wiring system thus produced has a stable quality, and is highly reliable. As a result, the time taken up for the final inspection or an after-the work check-up is greatly reduced.

Moreover, layouts can be changed easily, by selecting the connecting position of the second modular plugs 21 of the first branch harness 2 for data communications, in respect to the first connector ports 19a of assembler socket 19 in the first main harness 1 for data communications, or selecting the connecting position of, respectively, the first relay plug 13 of the second main harness 3 for power supply, the second relay plug 14 of the second branch harness 4 for power supply and the power-supply plug 15 of the OA tap 5, in respect to the third connector ports 6a and 6b of joint box 6 for power supply. The layouts can thus be provided with great flexibility. In addition, the wiring materials and the other component parts can be ordered, without having to refer to detailed layout such as layouts for a user's desk. Furthermore, changes in layout can be responded to very quickly.

The cables are assembled in a rack 7 for LAN systems. This assembling work, carried out in the rack, took much time in hitherto known installation works. According to the present invention, this in-the-rack working step can be omitted, thereby improving the work efficiency.

Further, network apparatuses e.g. a personal computer 24 and a telephone apparatus 25, as well as a free-access floor 33, can also be combined into a kit and delivered as such. In this manner, delivering frequency can be kept to a minimum, and late delivering can be prevented efficiently. The work efficiency can thus be further improved.

As mentioned above, the present invention concerns a method of installing a wiring system in the premises, and a wiring system adapted thereto. The wiring system comprises a kit made by combining:
at least a first main harness for data communications having two end portions, one of which is mounted with a first data-transmission modular plug and the other of which is mounted with a main-harness assembler socket having a plurality of assembler connector ports;
at least a first branch harness for data communications having two end portions, one of which is mounted with a second data-transmission modular plug to be connected to the assembler connector ports of at least a first main harness for data communications, and the other of which is mounted with a branch-harness socket having at least one branch-harness connector port;
at least a second main harness for power supply having two end portions, one of which is mounted with connector terminals and the other of which is mounted with a first power-supply plug;
at least a second branch harness for power supply having two end portions, both of which are mounted with a respective second power-supply plug; and
at least one OA tap having two end portions, one of which is mounted with a third power-supply plug and the other of which is mounted with a power-supply socket; and
at least one joint box for power supply including a plurality of joint-box connector ports adapted for connecting to one or several relay plugs and one or several power-source plugs;

The wiring system is designed according to the layout of premises. The aforementioned at least a first main harness, first branch harness, second main harness, second branch harness, OA tap and joint box are prepared according to the design of the wiring system in a necessary number in a manufacturing factory, so that they can be combined as a kit. The kit is transferred to a mounting site where wiring is carried out.

The end conditioning process step on the mounting site thus becomes unnecessary. No industrial scrap is therefore formed on the mounting site. Furthermore, even non-specialized persons can easily execute wire connections in accordance with the system construction. The operational steps are simplified, so that wiring operation can be carried out in a shorter period. As the operation is simplified, work forces therefor can be secured more easily.

As the wiring system is completed in a manufacturing factory, the quality of the products obtained is stable and reliable. The time needed for the final check-up is also greatly reduced.

As mentioned above, the layout for the wiring system is very flexible. Accordingly, the wiring materials can be ordered without being affected by a detailed layout such as a layout for a user's desk. Changes in layout can also be responded to with great rapidity.

Further, the kit may comprise at least one rack for LAN systems which includes at least one wire-distributing board, at least one modular patch panel and at least one patch cord. Cumbersome operation steps in the rack, where cables are assembled, thus become unnecessary, so that the working efficiency is improved.

## Claims

1. A method of installing a wiring system in premises, characterised in that said method comprises the steps of:
designing a wiring system corresponding to a layout of said premises;
providing, on a manufacturing site, at least a first main harness (1) for data communications having two end portions, one of which is mounted with a first modular plug (18), and the other of which is mounted with an assembler socket (19) having a plurality of first connector ports (19a);
providing, likewise, at least a first branch harness (2) for data communications having two end portions, one of which is mounted with a second modular plug (21) to be connected to said first connector ports (19a) of said at least a first main harness (1), and the other of which is mounted with a terminal socket (22) having at least one second connector port (22a);
providing, likewise, at least a second main harness (3) for power supply having two end portions, one of which is mounted with at least one connector terminal (12) and the other of which is mounted with a first relay plug (13);
providing, likewise, at least a second branch harness (4) for power supply having two end portions, both of which are mounted with a respective second relay plug (14);
providing, likewise, at least one OA tap (5) having two end portions, one of which is mounted with a power-supply plug (15), and the other of which is mounted with a power-supply socket (16);
providing, likewise, at least one joint box (6) for power supply including a plurality of third connector ports (6a, 6b) adapted for connecting to said first and second relay plugs (13, 14) and said power-supply plug (15);
assembling said at least a first main harness (1), said at least a first branch harness (2), said at least a second main harness (3), said at least a second branch harness (4), said at least one OA tap (5) and said at least one joint box (6) in said manufacturing site according to a design of said wiring system, so that a kit is formed; and
delivering said kit to said premises where wiring is carried out.

2. The method according to claim 1, wherein said providing steps further comprise providing, on said manufacturing site, at least one rack (7) for LAN systems which includes at least one wire-distributing board, at least one modular patch panel (27) and at least one patch cord (28).

3. The method according to claim 1 or 2, wherein said providing steps further comprise providing, on said manufacturing site, at least one electricity-distributing board (10).

4. A wiring system adapted to be formed on a manufacturing site and delivered to premises where wiring is carried out, characterised in that said wiring system comprises a kit, said kit being formed by combining:
at least a first main harness (1) for data communications having two end portions, one of which is mounted with a first modular plug (18) and the other of which is mounted with an assembler socket (19) having a plurality of first connector ports (19a);
at least a first branch harness (2) for data communications having two end portions, one of which is mounted with a second modular plug (21) to be connected to said first connector ports (19a) of said at least a first main harness (1), and the other of which is mounted with a terminal socket (22) having at least one second connector port (22a);
at least a second main harness (3) for power supply having two end portions, one of which is mounted with at least one connector terminal (12), and the other of which is mounted with a first relay plug (13);
at least a second branch harness (4) for power supply having two end portions, both of which are mounted with a respective second relay plug (14);
at least one OA tap (5) having two end portions, one of which is mounted with a power-supply plug (15), and the other of which is mounted with a power-supply socket (16); and
at least one joint box (6) for power supply including a plurality of third connector ports (6a, 6b) adapted for connecting to said first and second relay plugs (13, 14) and said power-supply plug (15);
said wiring system being designed according to a layout of said premises.

5. The wiring system according to claim 4, wherein said kit is formed by further combining at least one rack (7) for LAN systems which includes at least one wire-distributing board, at least one modular patch panel (27) and at least one patch cord (28).

6. The wiring system according to claim 4 or 5, wherein said kit is formed by further combining at least one electricity-distributing board (10).
